(19) Europäisches Patentamt

European Patent Office

Office européen des brevets

(11) **EP 3 599 293 A1**

(12) **EUROPEAN PATENT APPLICATION**

(43) Date of publication:
**29.01.2020 Bulletin 2020/05**

(51) Int Cl.:
*C25B 11/04* [(2006.01)]    *C25B 1/04* [(2006.01)]

(21) Application number: **18185671.7**

(22) Date of filing: **26.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.**
**80539 München (DE)**

(72) Inventors:
• **LI, Gouwei**
  **01069 Dresden (DE)**

• **FU, Chenguang**
  **01187 Dresden (DE)**
• **KUMAR, Nitesh**
  **01159 Dresden (DE)**
• **SUN, Yan**
  **01217 Dresden (DE)**
• **MANNA, Kaustuv**
  **01217 Dresden (DE)**
• **FELSER, Claudia**
  **06118 Halle (DE)**

(74) Representative: **Schweitzer, Klaus**
**Plate Schweitzer Zounek**
**Patentanwälte**
**Rheingaustrasse 196**
**65203 Wiesbaden (DE)**

(54) **PT-A BINARY COMPOUNDS AS ELECTROCATALYSTS FOR HYDROGEN EVOLUTION REACTION**

(57)    The present invention provides topological $Pt_xA_y$ intermetallic compounds, wherein $0< x \leq 10$, $0< y \leq 10$ and A is independently selected from a transition metal of IUPAC group 7, 8 or 9 or a main group element of IUPAC group 13, 14 or 15, as highly active electrocatalysts for hydrogen evolution reaction.

Figure 2

**Description**

BACKGROUND

Hydrogen fuels, generated by electrochemical water splitting, are considered to be an ideal solution for the high global energy demand and a proper response to increasing environmental problems. The production of hydrogen by means of water splitting requires highly active and stable catalyst materials. Yet, in spite of intense research efforts, noble metals - typically platinum - with its low overpotential and known long-term stability, are still the most active catalysts for the hydrogen evolution reaction (HER). However, the high noble metal price and the scarce element availability severely impede their application for large-scale hydrogen production. In addition, many of the current electrocatalysts for the HER perform well under acid conditions. Whereas, under alkaline conditions, they are relatively poor electrocatalysts. Therefore, there is a demand for low-cost electrocatalyst materials for HER with high activity at low overpotential and long-term stability, specifically under alkaline conditions.

PRIOR ART

US20150259810A1 discloses a hydrogen evolution reaction catalyst which includes at least one component selected from a group consisting of transition metal phosphides and first row transition metal sulfides. The catalyst can be in the form of nanoparticles.

US20140116890A1 provides systems and methods for a hydrogen evolution reaction catalyst. Electrode materials include a plurality of clusters. The electrode exhibits bifunctionality with respect to the hydrogen evolution reaction ($H_2$ as well as $O_2$ evolution). The electrode with clusters exhibits improved performance compared to the intrinsic material of the electrode absent the clusters.

US20160160365A1 provides metal nitrides and methods of making and using same, including using such metal nitrides as catalysts for hydrogen evolution reactions.

US6440385B1 discloses a composite material comprising a mechanical mixture of aluminum oxide(s) and/or aluminum hydroxide(s) and aluminum (Al) metal, which when submerged in water, produces hydrogen gas at or near to neutral pH. The phenomenon has been demonstrated reproducibly. The evolution of hydrogen gas is dependent on several factors, e.g. temperature, pH, proportion and particle size of the ingredients and mixing conditions.

The water splitting reaction proceeds for the mass ratio of Al to oxide or hydroxide in the entire range up to 99%. The reaction proceeds in a pH range of 9>pH>4, and at water temperatures, from about 10 °C to 90 °C.

EP3169828A1 presents a cathode for water splitting production, including (1) a porous substrate and (2) an electrocatalyst fixed to the porous substrate. The electrocatalyst includes heterostructures of a first material and a second material that partially covers the first material.

US2017/0044679 A1 provides electrodes for catalyzing electrochemical reactions (e.g., the hydrogen evolution reaction). The electrode may comprise a ternary pyrite-phase transition metal phosphochalcogenide (e.g., CoPS) disposed on a substrate, wherein the ternary pyrite-phase transition metal phosphochalcogenide is a solid ternary compound of a transition metal, phosphorous (P), and a chalcogen. The solid material is characterized by a substantially single, ternary alloy phase having a pyrite crystal structure. Methods of using and making the electrodes are also provided.

Recently, the theoretical prediction of topological semimetals followed by their experimental realization has generated an enormous interest among researchers. These exotic topological materials exhibit unique transport phenomena, including ultrahigh carrier mobility. Since carrier mobility is also a feature of active catalysts, these newly developed topological semimetals could thus be promising new catalyst materials. Therefore, it seems very attractive to investigate the catalytic performance of topological semimetals, specifically single crystalline topological semimetals.

OBJECT OF THE INVENTION

It was an object of the invention to present improved highly active electrocatalysts for the HER. More specifically, it was an object to provide low-cost electrocatalyst materials for HER with high activity at low overpotential and long-term stability, specifically under alkaline conditions.

SUMMARY OF THE INVENTION

The present invention provides topological $Pt_xA_y$ intermetallic compounds wherein $0< x \leq 10$, $0< y \leq 10$ and A is independently selected from a transition metal of IUPAC group 7, 8 or 9 or a main group element of IUPAC group 13, 14 or 15, as highly active electrocatalysts for HER. In a preferred embodiment of the invention the $Pt_xA_y$ intermetallic compound is $PtSn_4$ or $PtMn_3$, more preferred single crystalline $PtSn_4$ and $PtMn_3$.

BRIEF DESCRIPTION OF THE DRAWINGS

Figure 1a:    Crystal structure of $PtSn_4$.

Figure 1b:    High-resolution transmission electron microscopy (HRTEM) image of the $PtSn_4$ sample prepared by Focused Ion Beam technique.

Figure 1c:    Comparison of the atomic structure of the single crystal (Pt and Sn atoms are shown as bright and dark spots respectively) with a superimposed $PtSn_4$ unit cell along the *b* direction (blue for Pt and orange for Sn atoms).

Figure 1d:    Temperature dependence of resistivity of $PtSn_4$ single crystal.

Figure 1e:    SEM image of a $PtSn_4$ single crystal.

Figure 1f:    Selected area electron diffraction (SAED) recorded along the [010] crystal orientation.

Figure 2a:    HER polarization curves of Cu wire, Pt foil, 20% Pt/C, and $PtSn_4$ single crystal.

Figure 2b:    Corresponding Tafel plots of Pt foil, 20% Pt/C, and $PtSn_4$ single crystal in 1 M KOH electrolyte.

Figure 2c:    Multi-current process of $PtSn_4$ single crystal electrode with the current density increased from 10 $mA \cdot cm^{-2}$ to 110 $mA \cdot cm^{-2}$ without iR correction.

Figure 2d:    Current-time (i-t) chronoamperometric response of $PtSn_4$ electrocatalyst at an overpotential of 37 mV in the initial test, and 68 mV after exposed in air for 3 months.

Figure 3:     SEM images of the $PtMn_3$ single crystal. The crystal has a flat surface up 2 mm in dimension.

Figure 4a:    Polarization curves of Pt/C, Pt foil, and $PtMn_3$ single crystal electrocatalysts in 1 M KOH solution.

Figure 4b:    Polarization curve for the $PtMn_3$ crystal to an overpotential of 200 mV.

Figure 4c:    Tafel analysis of Pt/C, Pt foil, and $PtMn_3$ single crystal electrocatalysts in 1 M KOH solution.

Figure 4d:    Stability test of the $PtMn_3$ single crystal electrocatalyst.

DETAILED DESCRIPTION OF THE INVENTION

To achieve fast kinetics for practical applications, suitable HER catalysts are necessary. Platinum with its nearly zero overpotential is still the benchmark catalyst for water electrolysis. However, the high price and scarcity of Pt impede their widespread use. Many efforts have been made to lower the cost by replacing Pt with earth-abundant metals or their compounds, or increasing the catalyst activity by nano-structuring, doping, the application of strain, and/or by creating sharp edges on the catalyst material (e.g. crystals). The aforementioned strategies are effective in improving the performance of the known catalysts, but however, create more problems such as identifying and controlling the active sites where catalysis occurs, introducing chemical stability issues, and making it difficult to explore reaction mechanisms.

It has now surprisingly found that bulk $Pt_xA_y$ binary compounds, specifically Pt-Sn and Pt-Mn binary compounds, which have been identified as topological semimetals, are highly active electrocatalyst for the HER.

Accordingly, in a first embodiment the present invention is directed to an electrocatalyst for hydrogen evolution reaction comprising at least a topological binary compound of the formula I

$$Pt_xA_y \ (I)$$

wherein

*x*    is >0 and $\leq$ 10,

*y*    is >0 and $\leq$10, and

A    is independently selected from a transition metal of IUPAC group 7, 8 or 9 or a main group element of IUPAC group 13, 14 or 15.

In a preferred embodiment

*x*    is a number ranging from 1 to 8, preferably 1 to 3, more preferably 1, and

*y*    is a number ranging from 1 to 7, preferably 2 to 7, more preferably 4 to 7

In a further preferred embodiment

3

A    is selected from: Mn, Fe, Co, Al, Ga, In, Si, Ge, Sn, Pb, P, As, Sb, Bi.

Exemplary binary Pt-A compounds are listed in the below table:

| Pt-A | Binary phases | | | | | | |
|------|------|------|------|------|------|------|------|
| **Pt-Mn** | $Pt_3Mn$ | $PtMn$ | $PtMn_3$ | | | | |
| **Pt-Fe** | $Pt_3Fe$ | $PtFe$ | $PtFe_3$ | | | | |
| **Pt-Co** | $PtCo$ | | | | | | |
| **Pt-Al** | $Pt_3Al$ | $Pt_5Al_3$ | $PtAl$ | $Pt_2Al_3$ | $PtAl_2$ | $Pt_8Al_{21}$ | $Pt_5Al_{21}$ |
| **Pt-Ga** | $Pt_3Ga$ | $Pt_2Ga$ | $Pt_5Ga_3$ | $PtGa$ | $Pt_2Ga_3$ | $PtGa_2$ | $Pt_3Ga_7$ | $PtGa_6$ |
| **Pt-In** | $Pt_3In$ | $Pt_3In_2$ | $Pt_{13}In_9$ | $PtIn$ | $Pt_2In_3$ | $Pt_3In_7$ | |
| **Pt-Si** | $Pt_{25}Si_7$ | $Pt_3Si$ | $Pt_{12}Si_{15}$ | $Pt_2Si$ | $Pt_6Si_5$ | $PtSi$ | |
| **Pt-Ge** | $Pt_3Ge$ | $Pt_2Ge$ | $Pt_3Ge_2$ | $PtGe$ | $Pt_2Ge_3$ | $PtGe_2$ | |
| **Pt-Sn** | $Pt_3Sn$ | $PtSn$ | $Pt_2Sn_3$ | $PtSn_2$ | $PtSn_4$ | | |
| **Pt-Pb** | $Pt_3Pb$ | $PtPb$ | $PtPb_4$ | | | | |
| **Pt-P** | $Pt_5P_2$ | $PtP_2$ | | | | | |
| **Pt-As** | $PtAs_2$ | | | | | | |
| **Pt-Sb** | $PtSb$ | $PtSb_2$ | | | | | |
| **Pt-Bi** | $PtBi$ | $PtBi_2$ | | | | | |

Especially preferred are platinum-based $PtSn_4$ and $PtMn_3$, specifically single crystalline platinum-based $PtSn_4$ and $PtMn_3$.

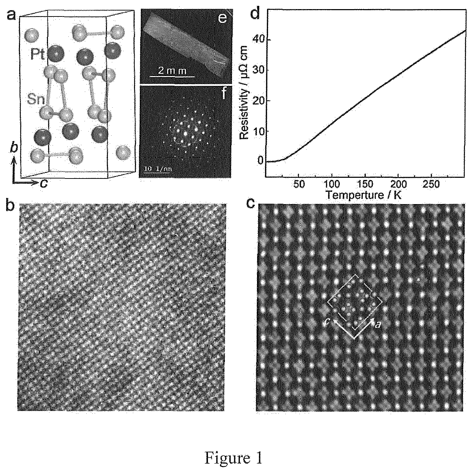

Among the Pt-"A" binary compounds $PtSb_2$, $PtBi_2$, $PtMn_3$, $PtSn_4$, $PtPb_4$, $Pt_5Al_{21}$ and $PtGa_6$ are compounds with a remarkably low Pt content which are, thus, very promising binary compounds for practical catalyst application from the viewpoint of materials cost. $PtSn_4$ crystallizes in a tetragonal space group (Ccca (No. 68)) and shows a layered structure with alternating Pt and Sn layers (see Figure 1a). The extremely weak bonding between the Sn-Pt-Sn layers in $PtSn_4$ makes the exposing of a "pure" Pt layer possible, and avoids the existence of metastable dangling bond surface states. Unlike the electrocatalysts with nanostructures, larger single crystals with defined surfaces, make the determination of catalytic active sites easier.

GENERAL METHOD OF MANUFACTURE

The Pt-"A" binary compounds of the present invention can e.g. be grown out of an "A"-element-rich binary melt. For example, single crystals of $PtSn_4$ can be grown out of a Sn-rich binary melt as disclosed in E. Mun, H. Ko, G.J. Miller, G.D. Samolyuk, S.L. Bud'ko, P.C. Canfield, Magnetic field effects on transport properties of PtSn4, Phys. Rev. B 85 03135(2012). The starting elements Pt and "A" (when A is a main group element of IUPAC group 13, 14 or 15) are mixed together with an initial 10 to 50, preferably 20 to 40, more preferably 25 to 35 folds gram-atom excess of "A". The mixture is then heated to a temperature of above the melting point of the "A"-element; preferably of about 400 °C, more preferably about 500 °C and most preferred of about 600 °C over a period of 1h to 10h, preferably 2h to 8h, more preferably 3h to 7h and then kept for 5h to 50h, preferably 10h to 30h, more preferably about 20h at that temperature. Preferably the mixture is placed in an inert crucible for heating, e.g. an alumina crucible which preferably is sealed, e.g. in a quartz tube under a partial pressure of an inert gas, e.g. Ar. Thereafter the Pt/"A" mixture is slowly cooled to a temperature of about 450 °C, preferably 400 °C, more preferably 350 °C over a period of 40h to 90h, preferably 50h to 80h, more preferably 55h to 65h. The excess "A" element is then removed, e.g. by using a centrifuge.

When "A" is a IUPAC group transition metal, the Pt-"A" binary compounds can be manufactured as follows: First, a polycrystalline ingot is prepared, e.g. using induction or arc melting technique with the stoichiometric ration of highly pure Pt and "A" metal pieces. The polycrystalline ingot is then crushed into microcrystalline powders and filled preferably in an alumina tube with a cone shape end and then fully sealed in a tantalum tube. The tube is then heated up to a temperature higher than the melting point of Pt-A compound to obtain a fully molten state and then slowly cooled to about 650 °C and then to room temperature.

GENERAL PROPERTIES

The electrocatalysts of the present invention exhibit a very low resistivity at room temperature, which is in the range of that of the pure Pt and "A" metals; $PtSn_4$, for example, shows an in-plane resistivity ($\rho$) of the $PtSn_4$ crystal as low as 40 $\mu\Omega$ cm at room temperature.

Moreover, the present electrocatalysts show higher activity under alkaline conditions than Pt itself. The overpotential to deliver a current density of 10 $mA/cm^2$ is only 37 mV. The Tafel slope is as low as 39 mV/dec. in alkaline medium. All these values are lower than that of Pt foil (71 mV @10 $mA/cm^2$ with Tafel slope of 74 mV/dec.), and even comparable with nano Pt/C catalyst (28 mV @10 $mA/cm^2$ with Tafel slope of 34 mV/dec.). The exchange current density is determined to be 0.585 $mA/cm^2$, which is higher than that of Pt/C catalyst with a value of 0.518 $mA/cm^2$. The high chemical stability and electrochemical activity of the electrocatalysts do not change even after the compounds have been exposed to air for 3 months. The HER exchange current density can even be higher than that of a nanostructure Pt/C catalyst at an overpotential of above 70 mV.

The electrocatalyst of the present invention consists of a binary Pt-"A" compound. For example, the binary Pt-"A" compound can be grown on a conductive substrate such as Ni foam, carbon cloth, or can be mixed with graphene to increase the mobility and conductivity. However, it has surprisingly been found that the present Pt-"A" compounds can be used in single crystal form directly as a working electrode. In this case the electrode has a size of about 0.5 to 1.5 $\times$ 0.5 to 3.0 $\times$ 0.05 to 1.0 $mm^3$, preferably about 1 $\times$ 2 $\times$ 0.1 $mm^3$. The single crystal electrode can then be attached to a wire, e.g. Cu wire, e.g. with silver paint.

In the following Examples, the invention is explained in more detail.

EXAMPLE 1

SINGLE CRYSTALLINE $PTSN_4$

High-yield single crystals of $PtSn_4$ can be grown out of a Sn-rich binary melt. The starting elements Pt (shot, 99.99%) and Sn (shot, 99.999%) are mixed together with an initial stoichiometry of $Pt_4Sn_{96}$, and then the mixture was placed in an alumina crucible and sealed in a quartz tube under a partial Ar pressure. The quartz tube is heated to 600 °C over a period of 5h, and then kept for 20h at 600 °C. Then it is slowly cooled down to 350 °C over 60h. The excess Sn flux is removed by using a centrifuge at 400 °C. The synthesized single crystals of $PtSn_4$ are large, layered plates which can be easily cleaved.

$PtSn_4$ crystallizes in the centrosymmetric space group Ccca (No. 68) with lattice constants a = 6.4208(7), b = 11.3592(1), and c = 6.3766(7) Å at 300 K (see Figure 1a). Cubic shaped crystals can be obtained with in-plane dimensions of a few micrometers and thicknesses of hundred micrometers which can directly be used as an electrode for HER. Thin lamella samples from the as-grown crystals for high-resolution transmission electron microscopy (TEM) - see Figure 1b - were fabricated by Focused ion beam (FIB) micromachining. Clear lattice fringes with an interplane distance of 0.32 nm, which correspond to the (200) plane can be seen on the lattice-resolved TEM image. The noise corrected high-resolution scanning TEM (HR-STEM) further confirms the high crystallinity of the sample. The Sn-Pt-Sn stacking sequence retains very well with 100 % occupancy of the Pt and Sn sites (no crystal defects, no unoccupied sites, no distortion in the crystal) but allows for a slight disorder in the ac-plane due to the weak bond between the layers.

A linear temperature dependency is obtained in the temperature range from 2 to 300 K (see Figure 1d). The in-plane resistivity ($\rho$) of $PtSn_4$ crystal as low as 40 $\mu\Omega$ cm at room temperature is as low as the values for pure Pt and Sn metals. A very large residual resistivity ratio RRR= $\rho$ (300 K) / $\rho$ (2 K) = 1000 was obtained which confirms the high quality of the crystal.

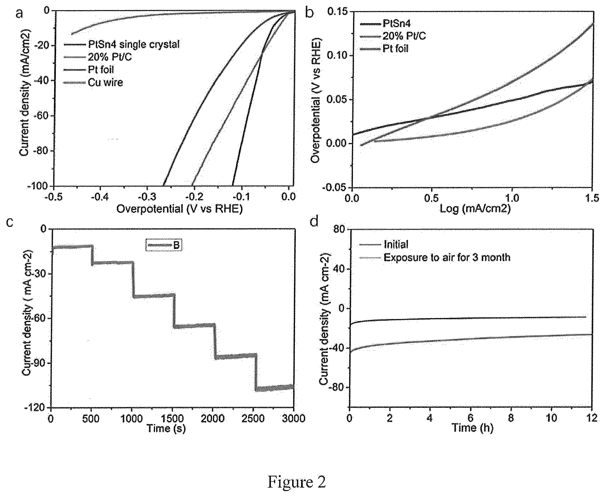

The HER performance evaluation of the single crystal was performed on the Autolab PGSTAT302N with an impedance module electrochemistry workstation. A conventional three electrodes cell configuration was employed. A Ag/AgCl (3 M KCl) electrode was used as the reference electrode, and a graphite rod was used as the counter electrode. The electrolyte was Ar saturated 1 M KOH solution. The polarization curves of a clean Cu wire/silver paint, 20% Pt/C on Ni foam, Pt foil, and $PtSn_4$ single crystal electrodes are compared (see Figure 2a). Notably, a sharp increase in cathode current with an onset overpotential of about 0 mV is observed on the $PtSn_4$ single crystal electrode. To achieve a geometric current density of 10 $mA \cdot cm^{-2}$, only an impressively low overpotential of 37 mV is needed. This value is close to that of Pt/C nanostructure (28 mV) and much smaller than that of Pt foil (71 mV). Tafel analysis from the extrapolation of the linear region yields a Tafel slope of 39, 34, and 74 mV/dec. for $PtSn_4$ single crystal, 20% Pt/C, and Pt foil, respectively, implying a rapid HER rate with Volmer-Heyrovsky pathway as the rate determining step (Figure 2b). The HER exchange current density for $PtSn_4$ single crystal is calculated to be 0.585 mA / $cm^2$, even higher than that of nanostructure Pt/C catalyst (0.518 mA/ $cm^2$).

The multiple-step chronopotentiometric process for the $PtSn_4$ electrode was displayed in Figure 2c with the current density being increased from 10 to 110 $mA/cm^{-2}$ without iR correction. Simultaneous change between the current densities and applied voltage showed excellent mass transport, conductivity and mechanical robustness of the single crystalline electrode, which is not inferior to most reported nano-electrocatalyst materials.

At an overpotential of 37 mV, a current density of 10 $mA/cm^2$ is obtained and keeps almost unchanged during the 12 h reaction session (Figure 2d). The sample was then exposed to ambient air for 3 months and the following test at a current density of 30 $mA/cm^2$ still displayed good stability.

EXAMPLE 2

SINGLE CRYSTALLINE $PTMN_3$

$PtMn_3$ single crystals were grown using the Bridgman-Stockbarger crystal growth technique.

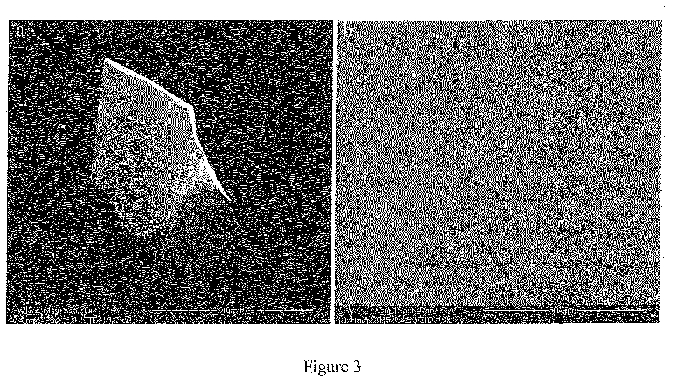

First the polycrystalline ingot was prepared using the induction melt technique with the stoichiometric ratio of high pure Mn and Pt (99.99 %) metal pieces. Prior to the reaction, the Mn pieces were cleaned with sealing in a quartz tube followed by a heating treatment in a furnace at 1000 °C for 24 h. The polycrystalline ingot was crushed into fine powder and filled in an alumina tube with a cone shape end and then sealed fully in a tantalum tube. The sample temperature was controlled with a thermocouple attached at the bottom of the crucible. First the sample was heated up to 1250 °C to obtain the fully molten state and then slowly cooled to 650 °C. The crystals were analyzed with the white beam backscattering Laue X-ray diffraction method at room temperature. The samples show very sharp spots that can be indexed by a single pattern, suggesting excellent quality of the grown crystals without any twining or domain. The crystal structure is found to be cubic with lattice parameters $a$ = 3.83(2) Å with flat surface up to mm size (Figure 3).

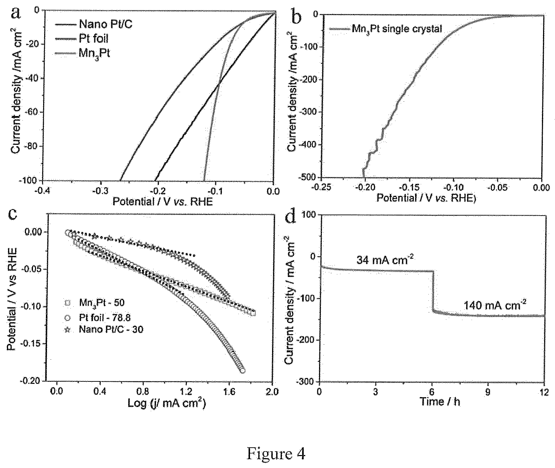

HER catalytic measurements of $PtMn_3$ were performed on the Autolab PGSTAT302N with an impedance module electrochemistry workstation. A conventional three electrodes cell configuration was employed. A carbon cloth with catalyst was used directly as working electrode. A Ag/AgCl (3 M KCl) electrode was used as the reference electrode, and a graphite rod was used as the counter electrode. 1 M KOH was used as electrolyte. Linear sweep voltammetry was recorded at a scan rate of 1 mV/s. All polarization curves were iR-corrected. All potentials were converted to a reversible hydrogen electrode. The corresponding polarization curves with iR compensation are shown in Figure 4a. The Pt/C catalyst only requires an overpotential ($\eta$) of 29 mV to deliver a current density of 10 $mA/cm^2$. By contrast, Pt foil affords a current density of 10 $mA/cm^2$ at 71 mV. Remarkably, the HER on the $PtMn_3$ single crystal occurs at 0 mV and the overpotential decreases significantly to 61 mV, which exceeds those of the majority of non-noble metal HER electrocatalysts, such as MoP nanoparticles (i.e., 130 mV at 10 $mA/cm^2$), MoP/graphene oxide composites (162 mV at 10 $mA/cm^2$), $Mo_2C$ nano-octahedron (151 mV at 10 $mA/cm^2$), CoP nanoparticles on CC (115 mV at 10 mA/cm2), and FeP nanorod arrays (218 mV at 10 $mA/cm^2$). Additionally, the cathodic current density of the $PtMn_3$ catalyst was significantly larger than that of Pt/C at an overpotential of 110 mV. More interestingly, the single crystal electrode can afford an extremely large current density of 500 $mA/cm^2$ with an overpotential of only 200 mV (Figure 4b). This makes it more suitable for practical application.

Tafel plots were then employed to further investigate the HER kinetics of the electrocatalysts (Figure 4c). More specifically, Pt/C exhibited the lowest Tafel slope of 33 mV/dec., suggesting that the Tafel reaction was the rate-limiting step. As a comparison, the Tafel slope of the bare Pt foil was 79 mV/dec. However, the Tafel slope of the prepared $PtMn_3$ single crystal was 50 mV/dec., indicating that the HER kinetics of this material followed the Volmer-Heyrovsky mechanism. Interestingly, the exchange current density of $PtMn_3$ was determined to be 0.563 $mA/cm^2$, outperforming that of Pt/C (0.52 $mA/cm^2$). The stability of the MoP@C catalyst was subsequently evaluated by long-term electrolysis at a constant overpotential (Figure 4d). There is no decrease in the electroactivity after 12h test, even at a large current density of 140 $mA/cm^2$.

**Claims**

1. Electrode for a hydrogen evolution reaction, comprising a topological binary compound of the formula I

$$Pt_xA_y \ (I)$$

wherein

$x$ is >0 and $\leq$ 10,
$y$ is >0 and $\leq$10, and
A is independently selected from a transition metal of IUPAC group 7, 8 or 9 or a main group element of IUPAC group 13, 14 or 15.

2. Electrode according to claim 1, wherein

   $x$ is a number ranging from 1 to 8, and
   $y$ is a number ranging from 1 to 7.

3. Electrode according to claim 1 or 2, wherein

   A is selected from: Mn, Fe, Co, Al, Ga, In, Si, Ge, Sn, Pb, P, As, Sb, Bi.

4. Electrode according to claim 1, 2 or 3, wherein the topological compound is $Pt_3Mn$, $PtMn$, $PtMn_3$, $Pt_3Fe$, $PtFe$, $PtFe_3$, $PtCo$, $Pt_3Al$, $Pt_5Al_3$, $PtAl$, $Pt_2Al_3$, $PtAl_2$, $Pt_8Al_{21}$, $Pt_5Al_{21}$, $Pt_3Ga$, $Pt_2Ga$, $Pt_5Ga_3$, $PtGa$, $Pt_2Ga_3$, $PtGa_2$, $Pt_3Ga_7$, $PtGa_6$, $Pt_3In$, $Pt_3In_2$, $Pt_{13}In_9$, $PtIn$, $Pt_2In_3$, $Pt_3In_7$, $Pt_{25}Si_7$, $Pt_3Si$, $Pt_{12}Si_{15}$, $Pt_2Si$, $Pt_6Si_5$, $PtSi$, $Pt_3Ge$, $Pt_2Ge$, $Pt_3Ge_2$, $PtGe$, $Pt_2Ge_3$, $PtGe_2$, $Pt_3Sn$, $PtSn$, $Pt_2Sn_3$, $PtSn_2$, $PtSn_4$, $Pt_3Pb$, $PtPb$, $PtPb_4$, $Pt_5P_2$, $PtP_2$, $PtAs_2$, $PtSb$, $PtSb_2$, $PtBi$, $PtBi_2$.

5. Electrode according to one of claims 1 to 4 wherein the topological compound is $PtSn_4$ or $PtMn_3$.

6. Electrode according to one of claims 1 to 5, wherein the electrode further comprises Ni foam, carbon cloth, or graphene.

7. Electrode according to one of claims 1 to 5, wherein the topological compound is a single crystal.

8. Electrode according to claim 7, wherein the topological compound is single crystalline $PtSn_4$ and $PtMn_3$.

9. Electrode according to one of claims 1 to 8, having an overpotential of lower than about 70 mV.

10. Method of manufacturing an electrode according to claim 1, comprising

    a) when "A" is a main group element of IUPAC group 13, 14 or 15: growing the binary compound of the formula I ($Pt_xA_y$ (I)) out of an "A"-element-rich binary melt; or
    b) when "A" is a IUPAC group transition metal: preparing a polycrystalline ingot with a stoichiometric ratio of Pt and "A" metal pieces, grinding the polycrystalline ingot and then heating the ground polycrystalline ingot to a temperature of above the melting point of binary compound of the formula I to obtain a fully molten state and then slowly cooling the melt to about 650 °C and then to room temperature.

11. Use of a topological binary compound of the formula I

$$Pt_xA_y\ (I)$$

    wherein

    $x$ is >0 and $\leq$ 10,
    $y$ is >0 and $\leq$ 10, and
    A is independently selected from a transition metal of IUPAC group 7, 8 or 9 or a main group element of IUPAC group 13, 14 or 15

    in an electrochemical reaction.

12. Use of a topological binary compound of the formula I

$$Pt_xA_y\ (I)$$

    wherein

    $x$ is >0 and $\leq$ 10,
    $y$ is >0 and $\leq$ 10, and
    A is independently selected from a transition metal of IUPAC group 7, 8 or 9 or a main group element of IUPAC group 13, 14 or 15

as a catalyst.

**13.** The use of claim 11 or 12 in a hydrogen evolution reaction.

Figure 1

Figure 2

Figure 3

Figure 4

Europäisches
Patentamt

European
Patent Office

Office européen
des brevets

# EUROPEAN SEARCH REPORT

**Application Number**

EP 18 18 5671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/126267 A1 (DISALVO FRANCIS J [US] ET AL) 1 July 2004 (2004-07-01) * the whole document * ----- | 1-13 | INV. C25B11/04 C25B1/04 |
| Y | CATHERINE R. RAJAMATHI ET AL: "Weyl Semimetals as Hydrogen Evolution Catalysts", ADVANCED MATERIALS, vol. 29, no. 19, 1 May 2017 (2017-05-01), page 1606202, XP055532616, DE ISSN: 0935-9648, DOI: 10.1002/adma.201606202 * the whole document * ----- | 1-13 | |
| Y | YUN WU ET AL: "Dirac node arcs in PtSn4", NATURE PHYSICS, vol. 12, no. 7, 1 July 2016 (2016-07-01), pages 667-671, XP055532954, GB ISSN: 1745-2473, DOI: 10.1038/nphys3712 * the whole document * ----- | 1-13 | |

**TECHNICAL FIELDS SEARCHED (IPC)**

C25B

The present search report has been drawn up for all claims

| Place of search | Date of completion of the search | Examiner |
|---|---|---|
| Munich | 18 January 2019 | Ritter, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 599 293 A1**

## ANNEX TO THE EUROPEAN SEARCH REPORT
## ON EUROPEAN PATENT APPLICATION NO.

EP 18 18 5671

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2019

| Patent document cited in search report | Publication date | Patent family member(s) | Publication date |
|---|---|---|---|
| US 2004126267 A1 | 01-07-2004 | AU    2003259288 A1 | 16-02-2004 |
| | | CN      1703792 A | 30-11-2005 |
| | | EP      1573841 A2 | 14-09-2005 |
| | | JP    2006501983 A | 19-01-2006 |
| | | KR   20050026044 A | 14-03-2005 |
| | | US    2004126267 A1 | 01-07-2004 |
| | | WO    2004012290 A2 | 05-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150259810 A1
- US 20140116890 A1
- US 20160160365 A1
- US 6440385 B1
- EP 3169828 A1
- US 20170044679 A1

**Non-patent literature cited in the description**

- **E. MUN ; H. KO ; G.J. MILLER ; G.D. SAMOLYUK ; S.L. BUD'KO ; P.C. CANFIELD.** Magnetic field effects on transport properties of PtSn4. *Phys. Rev. B,* 2012, vol. 85, 03135